(19) Europäisches Patentamt / European Patent Office / Office européen des brevets

(11) **EP 3 936 650 B1**

(12) **EUROPEAN PATENT SPECIFICATION**

(45) Date of publication and mention of the grant of the patent:
**21.02.2024 Bulletin 2024/08**

(21) Application number: **20767128.0**

(22) Date of filing: **26.02.2020**

(51) International Patent Classification (IPC):
**D04H 3/009** (2012.01)   **B32B 5/28** (2006.01)
**C08J 5/04** (2006.01)   **D04H 3/16** (2006.01)
**D01F 6/66** (2006.01)

(52) Cooperative Patent Classification (CPC):
**C08J 5/243; C08L 71/00; D01F 6/66; D04H 3/009; D04H 3/16;** C08G 2650/56; C08J 2363/00

(86) International application number:
**PCT/JP2020/007840**

(87) International publication number:
**WO 2020/179584 (10.09.2020 Gazette 2020/37)**

(54) **CONTINUOUS LONG-FIBER NON-WOVEN FABRIC, LAYERED BODY, AND COMPOSITE MATERIAL AND PRODUCTION METHOD THEREFOR**

ENDLOSFASERVLIESSTOFF, SCHICHTKÖRPER UND VERBUNDSTOFF SOWIE HERSTELLUNGSVERFAHREN DAFÜR

TISSU NON-TISSÉ DE FIBRES LONGUES CONTINUES, STRATIFIÉ, ET MATÉRIAU COMPOSITE AINSI QUE PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2019 JP 2019041245**

(43) Date of publication of application:
**12.01.2022 Bulletin 2022/02**

(73) Proprietor: **Kuraray Co., Ltd.**
**Kurashiki-shi, Okayama 710-0801 (JP)**

(72) Inventors:
• **OKAMOTO, Tetsuya**
  **Saijo-shi, Ehime 793-8585 (JP)**
• **SHIROTANI, Yasuhiro**
  **Tokyo 100-8115 (JP)**
• **OBATA, Soichi**
  **Okayama-shi, Okayama 702-8045 (JP)**

(74) Representative: **Müller-Boré & Partner**
**Patentanwälte PartG mbB**
**Friedenheimer Brücke 21**
**80639 München (DE)**

(56) References cited:
**JP-A- 2008 307 692   JP-A- 2012 127 044**
**US-B2- 8 409 486**

**Description**

BACKGROUND OF THE INVENTION

Field of the Invention

The present invention relates to a continuous-fiber nonwoven fabric (or continuous long-fiber nonwoven fabric), a composite material including the same, and a method for producing the composite material.

Description of Related Art

Composite material including reinforcing fibers (such as carbon fibers and glass fibers) and a matrix resin is lightweight and has excellent specific strength and specific rigidity. For these reasons, composite material is used in a wide range of fields: such as electrical and electronic industries, civil engineering and construction, aircrafts, automobiles, railways and ships, etc. It is known that composite material used in such fields generally includes continuous fibers (e.g. carbon fibers) as reinforcing fibers so as to exhibit high mechanical properties. It is also known that such composite material includes a thermosetting resin (such as an epoxy resin and a phenol resin) as a matrix resin of the composite material; among others, epoxy resins are often used.

A known technology for producing such composite material includes overlaying a pre-material containing reinforcing fibers and a matrix resin, and a meltable material different from the reinforcing fibers and the matrix resin, and melting the meltable material by heating or the like to uniformly distribute the meltable material in the composite material.

For example, Patent Document 1 (US Patent No. 8,409,486) describes combining a fiber material including a thermoplastic phenoxy resin having a certain weight-average molecular weight and a certain glass transition temperature with a preform including reinforcing fibers and a matrix resin, and further subjecting the combined body to curing treatment to produce a composite material.

CONVENTIONAL ART DOCUMENT

PATENT DOCUMENT

[Patent Document 1] US Patent No. 8,409,486

SUMMARY OF THE INVENTION

PROBLEMS TO BE SOLVED BY THE INVENTION

Patent Document 1, however, describes that fiber materials including certain thermoplastic phenoxy resins include fibers such as monofilaments, multifilaments and staples, as well as two-dimensional textile products such as woven fabrics obtained by processing the fibers. Such fiber materials, however, tend to be poor in denseness as compared with continuous-fiber nonwoven fabrics. Patent Document 1 also describes that the obtained fiber material is used in combination with reinforcing fibers and a matrix resin to produce a composite material. However, since fibers such as monofilaments, multifilaments and staples and textile products obtained by processing these fibers tend to have gaps between the fibers, the obtained composite material tends to have poor appearance due to air entrainment or the like.

Therefore, in view of such conventional problems, an object of the present invention is to provide a continuous-fiber nonwoven fabric having excellent denseness, a composite material having good appearance, and a method for producing the composite material.

MEANS FOR SOLVING THE PROBLEMS

The inventors of the present invention have made intensive studies in order to achieve the object and finally achieved the present invention.

That is, the present invention is defined in the appended set of claims and may include the following preferred aspects.

According to the present invention, a continuous-fiber nonwoven fabric comprises fibers containing an amorphous thermoplastic phenoxy resin as a main component, wherein the thermoplastic phenoxy resin has a weight-average molecular weight in a range of from 10,000 to 100,000 (preferably from 12,000 to 80,000 and more preferably from 15,000 to 60,000) and a glass transition temperature equal to or lower than 100°C.

The continuous-fiber nonwoven fabric may be a melt-blown nonwoven fabric or a spunbonded nonwoven fabric.

The fibers of the continuous-fiber nonwoven fabric may have an average fiber diameter equal to or smaller than 20 $\mu$m (preferably equal to or smaller than 15 $\mu$m, and more preferably equal to or smaller than 10 $\mu$m).

The continuous-fiber nonwoven fabric may have a basis weight (A) equal to or lower than 100 g/m$^2$ (preferably equal to or lower than 80 g/m$^2$, more preferably equal to or lower than 50 g/m$^2$, further preferably equal to or lower than 30 g/m$^2$).

The continuous-fiber nonwoven fabric may have a ratio of a permeability (B) to a basis weight (A) [permeability (B) / basis weight (A)] equal to or lower than 100 (preferably equal to or lower than 95, more preferably equal to or lower than 90, and further preferably equal to or lower than 85).

According to the present invention, a layered body comprises: the continuous-fiber nonwoven fabric according to the present invention; and a preform containing reinforcing fibers and a matrix resin, the preform being overlaid on the continuous-fiber nonwoven fabric.

The reinforcing fibers may be at least one selected from a group consisting of glass fibers, carbon fibers, liquid crystal polyester fibers, high-strength polyethylene fibers, aramid fibers, polyparaphenylene benzobisoxazole fibers, polyparaphenylene benzobisimidazole fibers, polyparaphenylene benzobisthiazole fibers, ceramic fibers, and metal fibers.

The matrix resin may be at least one selected from a group consisting of an epoxy resin, a phenol resin, an unsaturated polyester resin, a cyanate ester resins, a phenol-formaldehyde resin, and a melamine resin.

According to the present invention, a composite material comprises: a melt of the continuous-fiber nonwoven fabric according to the present invention; reinforcing fibers; and a matrix resin, wherein an outermost layer on either side of the composite material comprises the melt of the continuous-fiber nonwoven fabric.

The reinforcing fibers of the composite material may be fixed by the melt of the continuous-fiber nonwoven fabric.

According to the present invention, a method for producing the composite material according to the present invention comprises subjecting the layered body according to the present invention to curing treatment.

EFFECTS OF THE INVENTION

According to the present invention, it is possible to provide a continuous-fiber nonwoven fabric having excellent denseness, a composite material including the nonwoven fabric and having good appearance thanks to reduced cloudiness and reduced air entrainment, as well as a method for producing the composite material.

DESCRIPTION OF THE EMBODIMENTS

Hereinafter, the present invention will be described with reference to the embodiments. However, the present invention will not be limited to the embodiments.

Continuous-fiber nonwoven fabric

The present invention relates to a continuous-fiber nonwoven fabric including fibers containing an amorphous thermoplastic phenoxy resin as a main component, wherein the thermoplastic phenoxy resin has a weight-average molecular weight in a range of from 10,000 to 100,000 and a glass transition temperature equal to or lower than 100°C. Use of a thermoplastic phenoxy resin having a specific weight-average molecular weight and a specific glass transition temperature makes it possible to provide the continuous-fiber nonwoven fabric having excellent denseness and to further provide a composite material combinedly including such a nonwoven fabric, reinforcing fibers and a matrix resin and having good appearance thanks to reduced cloudiness and reduced air entrainment. In the present invention, it is important that the continuous-fiber nonwoven fabric comprises fibers containing a specific thermoplastic phenoxy resin as a main component. Where the fibers containing a thermoplastic phenoxy resin as a main component are short fibers, they tend to have insufficient strength in a machine direction (flow direction) as compared with that of long fibers, and a resultant composite material tends to have poor appearance because the composite material is likely to have air entrainment due to gaps between the short fibers. As used herein, the term "short fibers" means fibers cut to a length of 20 mm or shorter. The continuous-fiber nonwoven fabric according to the present invention is substantially free of such intentionally cut short fibers.

The form of the continuous-fiber nonwoven fabric according to the present invention is not particularly limited to a specific one, and the continuous-fiber nonwoven fabric may preferably be a melt-blown nonwoven fabric or a spunbonded nonwoven fabric obtained in accordance with a production method as described later. In particular, the continuous-fiber nonwoven fabric may preferably be a melt-blown nonwoven fabric in that the denseness of the continuous-fiber nonwoven fabric can be more easily enhanced thanks to a smaller average fiber diameter of the fibers.

Thermoplastic Phenoxy Resin

The thermoplastic phenoxy resin used in the present invention may be obtained by a conventionally known method in solution or in the absence of a solvent, such as a condensation reaction between a bivalent phenol compound and an epihalohydrin and a polyaddition reaction between a bivalent phenol compound and a bifunctional epoxy resin.

Examples of the bivalent phenol compound used for producing the thermoplastic phenoxy resin may include: hydroquinone, resorcin, 4,4'-dihydroxybiphenyl, 4,4'-dihydroxydiphenylketone, 2,2-bis(4-hydroxyphenyl)propane, 1,1-bis(4-hydroxyphenyl)cyclohexane, 1,1-bis(4-hydroxyphenyl)-3,3,5 -trimethylcyclohexane, bis(4-hydroxyphenyl)methane, 1,1-bis(4-hydroxyphenyl)ethane, 2,2-bis(4-hydroxyphenyl)butane, 1,1-bis(4-hydroxyphenyl)-1-phenylethane, bis(4-hydroxyphenyl)diphenylmethane, 2,2-bis(4-hydroxy-3-methylphenyl)propane, 2,2-bis(3-phenyl-4-hydroxyphenyl)propane, 2,2-bis(4-hydroxy-3-tert-butylphenyl)propane, 1,3-bis(2-(4-hydroxyphenyl)propyl)benzene, 1,4-bis(2-(4-hydroxyphenyl)propyl)benzene, 2,2-bis(4-hydroxyphenyl)-1,1,1,3,3,3-hexafluoropropane, and 9,9-bis(4-hydroxyphenyl)fluorene. Among them, in terms of physical properties and costs, 4,4'-dihydroxybiphenyl, 4,4'-dihydroxydiphenylketone, 2,2-bis(4-hydroxyphenyl)propane, or 9,9-bis(4-hydroxyphenyl)fluorene is particularly preferred.

Examples of the bifunctional epoxy resin used for producing the thermoplastic phenoxy resin may include: epoxy oligomers obtained by a condensation reaction between a bivalent phenol compound as mentioned above and an epihalohydrin, such as hydroquinone diglycidyl ether, resorcin diglycidyl ether, a bisphenol S type epoxy resin, a bisphenol A type epoxy resin, a bisphenol F type epoxy resin, methylhydroquinone diglycidyl ether, chlorohydroquinone diglycidyl ether, 4,4'-dihydroxydiphenyloxide diglycidyl ether, 2,6-dihydroxy naphthalene diglycidyl ether, dichlorobisphenol A diglycidyl ether, a tetrabromobisphenol A type epoxy resin, and 9,9-bis(4-hydroxyphenyl)fluorene diglycidyl ether. Among them, in terms of physical properties and costs, a bisphenol A type epoxy resin, a bisphenol S type epoxy resin, hydroquinone diglycidyl ether, a bisphenol F type epoxy resin, a tetrabromobisphenol A type epoxy resin, or 9,9-bis(4-hydroxyphenyl)fluorene diglycidyl ether is particularly preferred.

The thermoplastic phenoxy resin may be produced in the absence of a solvent or in the presence of a reaction solvent. The following reaction solvents may be suitably used: aprotic organic solvents such as methyl ethyl ketone, dioxane, tetrahydrofuran, acetophenone, N-methylpyrrolidone, dimethyl sulfoxide, N,N-dimethylacetamide, and sulfolane. Further, a phenoxy resin obtained by solvent reaction may be subjected to desolvation treatment using an evaporator or the like to obtain a solid resin free of a solvent.

Conventionally known polymerization catalysts may be suitably used as reaction catalysts in the production of the thermoplastic phenoxy resin, such as alkali metal hydroxides, tertiary amine compounds, quaternary ammonium compounds, tertiary phosphine compounds, and quaternary phosphonium compounds.

It is important that the thermoplastic phenoxy resin used in the present invention is amorphous. In the present specification, a resin is determined as "amorphous" on the basis of whether or not an endothermic peak is observed when resultant fibers are placed in a differential scanning calorimeter (DSC) and are subjected as a resin to temperature rise at a rate of 10°C/min in nitrogen atmosphere. Where a resin exhibits an endothermic peak which is too broad to clearly determine the endothermic peak, the resin may be determined as substantially amorphous because the resin would still be applicable for practical use.

It is important that the thermoplastic phenoxy resin used in the present invention has a weight-average molecular weight in a range of from 10,000 to 100,000. The weight-average molecular weight may preferably be from 12,000 to 80,000, and even from about 15,000 to 60,000. Where the weight-average molecular weight is lower than 10,000, the resin does not stably flow through a nozzle because the viscosity of the resin is too low, so that it is difficult to obtain fibers from such a resin. Where the weight-average molecular weight exceeds 100,000, it is difficult to produce a nonwoven fabric having a small fiber diameter because the viscosity of the resin is too high, so that a continuous-fiber nonwoven fabric having desired denseness cannot be obtained. The weight-average molecular weight of the thermoplastic phenoxy resin is determined in accordance with the method described in Examples.

It is important that the thermoplastic phenoxy resin used in the present invention has a glass transition temperature equal to or lower than 100°C. The glass transition temperature may preferably be equal to or lower than 98°C, and even equal to or lower than about 95°C. Where the glass transition temperature of the thermoplastic phenoxy resin constituting the continuous-fiber nonwoven fabric exceeds 100°C, the continuous-fiber nonwoven fabric may not be sufficiently heated on the whole during the production of the composite material, possibly causing a problem in appearance such as cloudiness due to unmelted residues. A lower limit of the glass transition temperature of the thermoplastic phenoxy resin is not particularly limited to a specific one and may be, for example, equal to or higher than 30°C, preferably equal to or higher than 50°C, and more preferably equal to or higher than 60°C in terms of heat resistance of the obtained nonwoven fabric. The glass transition temperature of the thermoplastic phenoxy resin is measured by differential scanning calorimetry (DSC) and is determined in accordance with the method described in Examples.

Fibers containing a thermoplastic phenoxy resin as a main component preferably contain the thermoplastic phenoxy resin in a proportion of 50 mass% or higher, more preferably 80 to 100 mass%, and further preferably 90 to 100 mass%.

As long as the effects of the present invention are not impaired, the fibers constituting the continuous-fiber nonwoven fabric according to the present invention may contain a component other than the thermoplastic phenoxy resin. Examples of the component other than the thermoplastic phenoxy resin may include: polypropylene, polyester, polyamide, liquid crystal polyester, antioxidant, antistatic agent, radical inhibitor, matting agent, ultraviolet absorber, flame retardant, and inorganic substance.

Examples of the inorganic substance may include: carbon nanotubes; fullerene; silicates such as talc, wallastinite, zeolite, sericite, mica, kaolin, clay, pyrophyllite, silica, bentonite, and alumina silicate; metal oxides such as silicon oxide, magnesium oxide, alumina, zirconium oxide, titanium oxide and iron oxide; carbonates such as calcium carbonate, magnesium carbonate and dolomite; sulfates such as calcium sulfate and barium sulfate; hydroxides such as calcium hydroxide, magnesium hydroxide and aluminum hydroxide; glass beads; glass flakes; glass powder; ceramic beads; boron nitride; silicon carbide; carbon black; and graphite.

As long as the effects of the present invention are not impaired, the continuous-fiber nonwoven fabric according to the present invention may include fibers other than the fibers containing a thermoplastic phenoxy resin as a main component. Examples of the fibers other than the fibers containing a thermoplastic phenoxy resin as a main component may include non-conductive fibers and glass fibers. Examples of the non-conductive fibers may include: polypropylene fibers, polyethylene fibers, polyethylene terephthalate fibers, polybutylene terephthalate fibers, and 6-nylon fibers.

Method for Producing Continuous-fiber nonwoven fabric

The method for producing a continuous-fiber nonwoven fabric according to the present invention is not particularly limited to a specific one and may suitably be carried out by melt blowing, spunbonding, flash spinning or electrospinning. Use of such a method makes it possible to easily obtain a continuous-fiber nonwoven fabric formed of fibers having a small average fiber diameter and thus having excellent denseness. Among others, melt blowing or spunbonding is preferably used in that these processes do not require a solvent in spinning, so that environmental impact can be minimized.

In the case of melt blowing, a conventionally known melt-blowing machine may be used as a spinning machine. The spinning temperature is not particularly limited to a specific one and may be, for example, from 250 to 380°C, preferably 270 to 360°C, and more preferably about 290 to 350°C. The temperature of hot air applied to the fibers immediately after discharge from nozzle holes (primary air temperature) is not limited to a specific one either and may be, for example, from 260 to 400°C, preferably about 270 to 380°C, and more preferably about 290 to 360°C. Further, the blowing amount (air amount) per meter of a nozzle width is not limited to a specific one either and may be, for example, from 5 to 50 Nm$^3$, preferably 6 to 40 Nm$^3$, and more preferably about 7 to 30 Nm$^3$.

In the case of spunbonding, a conventionally known spunbonding machine may be used as a spinning machine. The spinning temperature is not particularly limited to a specific one and may be, for example, from 250 to 350°C, preferably 260 to 340°C, and more preferably about 280 to 330°C. The temperature of hot air applied to the fibers immediately after spinning (drawing air temperature) is not limited to a specific one either and may be, for example, from 260 to 370°C, preferably 270 to 350°C, and more preferably about 290 to 340°C. Further, the drawing air is not particularly limited to a specific one and may be applied at a rate of, for example, from 500 to 5000 m/min, preferably 600 to 4000 m/min, and more preferably about 800 to 3000 m/min.

The continuous-fiber nonwoven fabric obtained by the production method may be subjected to three-dimensional interlacing treatment by spunlacing, needle punching, or steam jetting or the like in order to further improve the mechanical strength.

Physical Properties of Continuous-fiber nonwoven fabric

The average fiber diameter of the fibers constituting the continuous-fiber nonwoven fabric according to the present invention is not particularly limited to a specific one and may preferably be 20 μm or smaller, more preferably be 15 μm or smaller, and even about 10 μm or smaller. Where the average fiber diameter exceeds 20 μm, a resultant continuous-fiber nonwoven fabric tends to have a lower denseness, and a resultant composite material tends to have a lower surface smoothness. A lower limit of the average fiber diameter is not particularly limited to a specific one and may preferably be 1 μm or larger in terms of suppressed generation of fly waste, as well as ease of forming and ease of handling of the nonwoven fabric.

A basis weight (A) of the continuous-fiber nonwoven fabric according to the present invention is not particularly limited to a specific one and may preferably be 100 g/m$^2$ or lower, more preferably 80 g/m$^2$ or lower, further preferably 50 g/m$^2$ or lower, and even about 30 g/m$^2$ or lower. Where the basis weight (A) exceeds 100 g/m$^2$, due to an excessive fiber amount in the fabric, only a part of the fibers tends to be melted during the production process of the composite material in which curing treatment is performed by heating. This often inhibits impregnation of the melt fibers into a preform including a matrix resin and reinforcing fibers or results in poor appearance such as cloudiness and/or air entrainment. A lower limit of the basis weight (A) is not particularly limited to a specific one and may preferably be 4 g/m$^2$ or higher in terms of ease of forming of the nonwoven fabric.

An upper limit of a permeability (B) of the continuous-fiber nonwoven fabric according to the present invention is not particularly limited to a specific one and may preferably be 1,000 cm$^3$/cm$^2$·s or lower, more preferably 900 cm$^3$/cm$^2$·s or lower, more preferably 800 cm$^3$/cm$^2$·s or lower, and even about 500 cm$^3$/cm$^2$·s or lower. Where the permeability (B) exceeds 1,000 cm$^3$/cm$^2$ · s, it tends to be impossible to ensure the denseness of the continuous-fiber nonwoven fabric. This often results in uneven impregnation of the melt fibers into a preform including a matrix resin and reinforcing fibers, so that a target surface smoothness cannot be achieved. A lower limit of the permeability (B) is not particularly limited to a specific one and may preferably be 50 cm$^3$/cm$^2$·s or higher, and even about 70 cm$^3$/cm$^2$·s or higher. Where the permeability (B) is lower than 50 cm$^3$/cm$^2$·s, only a part of the fibers tends to be melted during the production process of the composite material in which curing treatment is performed by heating. This often inhibits impregnation of the melt fibers into a preform including a matrix resin and reinforcing fibers or results in poor appearance such as cloudiness and/or air entrainment.

An upper limit of the ratio of the permeability (B) to the basis weight (A) [permeability (B)/basis weight (A)] is not particularly limited to a specific one and may preferably be 100 or lower, more preferably 95 or lower, further preferably 90 or lower, and even about 85 or lower. Where the ratio [the permeability (B) / the basis weight (A)] exceeds 100, the continuous-fiber nonwoven fabric tends to have reduced denseness, or impregnation of the melt fibers into a preform including a matrix resin and reinforcing fibers tends to be prevented at some locations due to the non-uniform fiber amount. A lower limit of the ratio [the permeability (B) / the basis weight (A)] is not particularly limited to a specific one and may preferably be 5 or higher in order to achieve uniform impregnation of the melt fibers into the preform including the matrix resin and the reinforcing fibers and prevent poor appearance due to air entrainment or the like.

A thickness of a single sheet of the continuous-fiber nonwoven fabric according to the present invention is not particularly limited to a specific one and may preferably be from 0.01 to 3 mm, more preferably 0.05 to 2 mm, further preferably 0.10 to 1 mm, and even about 0.10 to 0.50 mm in terms of denseness and ease of handling.

Layered Body

The continuous-fiber nonwoven fabric according to the present invention has excellent denseness and is useful as a material for producing a composite material as described later. Accordingly, the continuous-fiber nonwoven fabric may be overlaid on a preform including reinforcing fibers and a matrix resin to obtain a layered body which is used as an intermediate in producing the composite material. As used herein, the "preform" means an intermediate material including a matrix resin and a fiber substrate constituted by reinforcing fibers. As long as the preform includes a matrix resin and a fiber substrate, the form of the preform is not particularly limited to a specific one. For example, the preform may have a form in which the matrix resin is impregnated into the fiber substrate, or in which particles and/or fibers made of the matrix resin are dispersed in the fiber substrate, or in which a film(s) and/or a sheet(s) made of the matrix resin is(are) overlaid on the fiber substrate. In the case where a preform has a form in which the matrix resin is impregnated into the fiber substrate, the preform may be, for example, preformed into a predetermined shape of a molded product or be shaped into the form of a prepreg (e.g. a sheet shape).

The type of the reinforcing fibers is not particularly limited to a specific one and may be, in terms of mechanical strength of a resultant composite material, at least one selected from a group consisting of glass fibers, carbon fibers, liquid crystal polyester fibers, high-strength polyethylene fibers, aramid fibers, polyparaphenylene benzobisoxazole fibers, polyparaphenylene benzobisimidazole fibers, polyparaphenylene benzobisthiazole fibers, ceramic fibers, and metal fibers. These reinforcing fibers may be used singly or in combination. The reinforcing fibers are selected such that the fibers do not melt during the production of the composite material. Among others, carbon fibers are preferable in order to enhance mechanical properties.

The shape of the fiber substrate is not particularly limited to a specific one and may be suitably adapted according to the intended use or the like. For example, the fiber substrate may be the form of a woven fabric, a non-crimp fabric (NCF), a unidirectional material (UD material), a knitted fabric, a nonwoven fabric, etc.

The type of the matrix resin is not particularly limited to a specific one as long as it is a thermosetting resin. For example, the matrix resin may be at least one selected from a group consisting of an epoxy resin, a phenol resin, an unsaturated polyester resin, a cyanate ester resins, a phenol-formaldehyde resin, and a melamine resin. Among others, an epoxy resin is preferable in terms of compatibility with the thermoplastic phenoxy resin.

The matrix resin may contain any of various known curing agents depending on the various types of the resin. For example, where the matrix resin is an epoxy resin, examples of the curing agent may include: amines, amides, imidazoles, acid anhydrides and the like.

The layered body may include at least one layer of a preform and at least one layer of a continuous-fiber nonwoven fabric. The layered body may include at least two layers of each. In terms of mechanical strength of a resultant composite material, the layered body includes preferably 5 or more layers of preforms and preferably 5 or more layers of continuous-fiber nonwoven fabrics. In order to ensure surface smoothness and to further enhance appearance, the layered body preferably includes a continuous-fiber nonwoven fabric disposed as an outermost layer on either side of the layered body, and more preferably includes continuous-fiber nonwoven fabrics disposed as outermost layers on both sides of the layered body.

A method for overlaying a preform and a continuous-fiber nonwoven fabric is not particularly limited to a specific one. For example, (i) a continuous-fiber nonwoven fabric and a preform including a matrix resin and reinforcing fibers may be separately prepared and overlaid on each other, or (ii) a continuous-fiber nonwoven fabric may be directly spun by melt blowing, spunbonding, flash spinning or electrospinning so as to be overlaid on a preform including a matrix resin and reinforcing fibers.

Composite Material

The present invention also includes a composite material including a melt of the continuous-fiber nonwoven fabric, reinforcing fibers, and a matrix resin, wherein an outermost layer on either side of the composite material comprises the melt of the continuous-fiber nonwoven fabric. Since the continuous-fiber nonwoven fabric according to the present invention has excellent denseness, the composite material, in which such a nonwoven fabric is melted so as to be integrated with the reinforcing fibers and the matrix resin, is unlikely to have cloudiness and/or air entrainment and thus has good appearance.

A method for producing the composite material is not particularly limited to a specific one and preferably includes subjecting the layered body to curing treatment. The layered body can be obtained by overlaying the continuous-fiber nonwoven fabric on the preform including the matrix resin and the reinforcing fibers, as described above. In the composite material obtained by such a method, the continuous-fiber nonwoven fabric and the matrix resin are once melted during the curing treatment, giving the composite material good appearance and excellent mechanical strength. Specifically, the continuous-fiber nonwoven fabric having good denseness is melted during the curing treatment, so that the thermoplastic phenoxy resin constituting the continuous-fiber nonwoven fabric can be uniformly impregnated into the surface of the composite material and throughout the composite material to fix the reinforcing fibers. Thus, irregularity of orientation of the reinforcing fibers is alleviated, so that bending strength and the like can be improved. In addition, the matrix resin is melted during the curing treatment, so that the mechanical strength of the reinforcing fibers can be improved.

The composite material preferably has a form in which the reinforcing fibers are fixed by a melt of the continuous-fiber nonwoven fabric. As used herein, the "form in which the reinforcing fibers are fixed by a melt of the continuous-fiber nonwoven fabric" means a state in which the thermoplastic phenoxy resin constituting the continuous-fiber nonwoven fabric, which is melted and is mixed with the matrix resin during the curing treatment, is uniformly impregnated into the surface of the composite material and throughout the composite material and is cured to fix the reinforcing fibers in place. The reinforcing fibers in the composite material may be fixed by a mixture of the melt of the continuous-fiber nonwoven fabric and the matrix resin. In the composite material, the thermoplastic phenoxy resin constituting the continuous-fiber nonwoven fabric may be chemically bonded to the matrix resin.

The conditions for the curing treatment are not particularly limited to a specific one, and the curing treatment may be carried out by overlaying the continuous-fiber nonwoven fabric and the preform and then applying heat and pressure to them using a hot press or the like. The heating temperature is not particularly limited to a specific one and may be, for example, from 120 to 300°C, preferably from 130 to 250°C, and more preferably from about 140 to 200°C. The pressure is not particularly limited to a specific one and may be, for example, from 5 to 100 MPa, preferably from 7 to 80 MPa, and more preferably from about 10 to 50 MPa. The time for applying heat and pressure is not particularly limited to a specific one and may be, for example, from 10 seconds to 30 minutes, preferably from 30 seconds to 20 minutes, and more preferably from about 1 minute to 10 minutes.

The composite material according to the present invention may be formed into a desired shape according to the intended use or the like. In such a case, in the curing treatment, the composite material may be heated by various thermoforming processes (such as air-pressure forming, vacuum forming and press forming) to be melted and cured in a desired shape.

The composite material according to the present invention may have a multilayered structure including, in a thickness direction of the composite material, a plurality of layers each having the reinforcing fibers oriented horizontally. Where the composite material is produced by the production method as described above, it is possible to increase a content of the reinforcing fibers in a resultant composite material. For example, the basis weight of the reinforcing fibers in the composite material may be in a range of from 100 to 5000 $g/m^2$, preferably from 500 to 4500 $g/m^2$, and more preferably from 800 to 4000 $g/m^2$.

EXAMPLES

Hereinafter, the present invention will be described in more detail with reference to the Examples and Comparative Examples. However, the present invention will not be limited by the Examples whatsoever. In the Examples and Comparative Examples below, various physical properties were determined in the following manner.

Weight-Average Molecular Weight of Thermoplastic Phenoxy Resin

A weight-average molecular weight (Mw) of a thermoplastic phenoxy resin was measured in terms of standard polystyrene by gel permeation chromatography (GPC). A measurement instrument and conditions used are listed below.

- Instrument: gel permeation chromatograph "GPC8020" manufactured by Tosoh Corporation
- Separation Column: "TSKgelG4000HXL" manufactured by Tosoh Corporation
- Detector: "RI-8020" manufactured by Tosoh Corporation
- Eluent: tetrahydrofuran
- Eluent Flow Rate: 1.0 ml/min
- Sample Concentration: 5 mg/10ml
- Column Temperature: 40°C

Glass Transition Temperature (°C) of Thermoplastic Phenoxy Resin

In accordance with JIS K 7121, 10 mg of a thermoplastic phenoxy resin was collected in an aluminum pan and was subjected to temperature rise at a rate of 10°C/min using a differential scanning calorimeter (DSC) to produce a thermogram and determine a glass transition temperature.

Basis Weight (A) ($g/m^2$) of Continuous-fiber nonwoven fabric

In accordance with JIS L 1906, three sample pieces (20 cm long $\times$ 20 cm wide) were taken per meter of a width of a continuous-fiber nonwoven fabric, and a mass of each sample piece was measured using an electronic balance. An average of the masses of the three sample pieces was calculated and was divided by a sample piece area of 400 $cm^2$ to obtain a mass per unit area as a basis weight (A) of the nonwoven fabric.

Permeability (B) ($cm^3/cm^2 \cdot s$) of Continuous-fiber nonwoven fabric

In accordance with JIS L 1096, 6.27.1 (method A: Frazier method), same sample pieces were prepared as those for the basis weight measurement, and a permeability of each sample piece was measured using a permeability tester (manufactured by TEXTEST (Switzerland): FX3300) with a measurement area set to 38 $cm^2$ and under a measurement pressure of 125 Pa. An average of measurements of the three sample pieces was calculated as a permeability (B) of the nonwoven fabric.

Average Fiber Diameter ($\mu$m) of Fibers Constituting Continuous-fiber nonwoven fabric

An image of a prepared nonwoven fabric was taken at an arbitrary point using a scanning electron microscope at a magnification of 1000 times. Fiber diameters of randomly selected 100 fibers were measured, and an average of the measurements was calculated as an average fiber diameter of the fibers.

Denseness of Continuous-fiber nonwoven fabric

A denseness of a continuous-fiber nonwoven fabric was calculated by the following formula. A smaller value represents a higher denseness.

$$\text{Denseness} = \text{Permeability (B)} / \text{Basis weight (A)}$$

Appearance of Composite Material

Appearance of a composite material, in view of the presence or absence of cloudiness and air entrainment, was observed by visual inspection and was determined in accordance with the following standards:

Good: good appearance without cloudiness or air entrainment,
Moderate: applicable for practical use with small cloudiness and/or air entrainment,

Poor: poor appearance with a lot of cloudiness and/or air entrainment

Example 1

Preparation of Continuous-fiber nonwoven fabric

A thermoplastic phenoxy resin (a condensation reaction product of 2,2-bis(4-hydroxyphenyl)propane and epichlorohydrin) having a weight-average molecular weight of 30,000 and a glass transition temperature of 90°C was prepared and was blown at a rate of 10 Nm$^3$ per meter of a nozzle width at a spinning temperature of 340°C and a hot air temperature of 340°C to obtain a melt-blown nonwoven fabric as a continuous-fiber nonwoven fabric having a basis weight (A) of 7.6 g/m$^2$, a permeability (B) of 637 cm$^3$/cm$^2$·s, an average fiber diameter of 8.6 $\mu$m, and a thickness of 0.18 mm/sheet. The obtained nonwoven fabric had a ratio [the permeability (B) / the basis weight (A)] of 100 or lower and was excellent in denseness.

Preparation of Composite Material

On a preform including a carbon fiber woven fabric ("W-3101" manufactured by Toho Tenax Co., Ltd.: 3K woven fabric, basis weight of 200 g/m$^2$) impregnated with an epoxy resin, was overlaid the continuous-fiber nonwoven fabric to give a unit of a layered body. Twelve of such units of the layered bodies were prepared and were overlaid on one another such that the preforms and the continuous-fiber nonwoven fabrics were alternately arranged, and then as an outermost layer, a continuous-fiber nonwoven fabric was placed on a preform to give a multilayered body. This multilayered body was thermocompression molded for 3 minutes at a temperature of 160°C and under a pressure of 20 MPa to obtain a composite material in the form of a flat plate. The obtained composite material had good appearance.

Example 2

Preparation of Continuous-fiber nonwoven fabric and Composite Material

A same thermoplastic phenoxy resin as the resin used in Example 1 was prepared and was blown at a rate of 10 Nm$^3$ per meter of a nozzle width at a spinning temperature of 340°C and a hot air temperature of 340°C to obtain a melt-blown nonwoven fabric as a continuous-fiber nonwoven fabric having a basis weight (A) of 12.2 g/m$^2$, a permeability (B) of 243 cm$^3$/cm$^2$·s, an average fiber diameter of 7.9 $\mu$m, and a thickness of 0.26 mm/sheet. The obtained nonwoven fabric had a ratio [the permeability (B) / the basis weight (A)] of 100 or lower and was excellent in denseness. Except for using the nonwoven fabric obtained by this procedure, a composite material was prepared in a same manner as that of Example 1. The obtained composite material had good appearance.

Example 3

Preparation of Continuous-fiber nonwoven fabric and Composite Material

A thermoplastic phenoxy resin (a condensation reaction product of 2,2-bis(4-hydroxyphenyl)propane and epichlorohydrin) having a weight-average molecular weight of 50,000 and a glass transition temperature of 95°C was prepared and was blown at a rate of 20 Nm$^3$ per meter of a nozzle width at a spinning temperature of 340°C and a hot air temperature of 340°C to obtain a melt-blown nonwoven fabric as a continuous-fiber nonwoven fabric having a basis weight (A) of 12.3 g/m$^2$, a permeability (B) of 496 cm$^3$/cm$^2$·s, an average fiber diameter of 8.8 $\mu$m, and a thickness of 0.31 mm/sheet. The obtained nonwoven fabric had a ratio [the permeability (B) / the basis weight (A)] of 100 or lower and was excellent in denseness. Except for using the nonwoven fabric obtained by this procedure, a composite material was prepared in a same manner as that of Example 1. The obtained composite material had good appearance.

Example 4

Preparation of Continuous-fiber nonwoven fabric and Composite Material

A thermoplastic phenoxy resin (a condensation reaction product of 2,2-bis(4-hydroxyphenyl)propane, bis(4-hydroxyphenyl)methane and epichlorohydrin) having a weight-average molecular weight of 20,000 and a glass transition temperature of 70°C was prepared and was blown at a rate of 22 Nm$^3$ per meter of a nozzle width at a spinning temperature of 300°C and a hot air temperature of 300°C to obtain a melt-blown nonwoven fabric as a continuous-fiber nonwoven fabric having a basis weight (A) of 12.3 g/m$^2$, a permeability (B) of 87 cm$^3$/cm$^2$·s, an average fiber diameter of 7.2 $\mu$m,

and a thickness of 0.13 mm/sheet. The obtained nonwoven fabric had a ratio [the permeability (B) / the basis weight (A)] of 100 or lower and was excellent in denseness. Except for using the nonwoven fabric obtained by this procedure, a composite material was prepared in a same manner as that of Example 1. The obtained composite material had good appearance.

Example 5

Preparation of Continuous-fiber nonwoven fabric and Composite Material

A same thermoplastic phenoxy resin as the resin used in Example 1 was prepared and was used to produce a spunbonded nonwoven fabric at a drawing air rate of 1200 m/min and at a spinning temperature of 300°C and a hot air temperature (drawing air temperature) of 300°C, as a continuous-fiber nonwoven fabric having a basis weight (A) of 20.4 g/m$^2$, a permeability (B) of 745 cm$^3$/cm$^2$·s, an average fiber diameter of 12.7 $\mu$m, and a thickness of 0.47 mm/sheet. The obtained nonwoven fabric had a ratio [the permeability (B) / the basis weight (A)] of 100 or lower and was excellent in denseness. Except for using the nonwoven fabric obtained by this procedure, a composite material was prepared in a same manner as that of Example 1. The obtained composite material had good appearance.

Example 6

Preparation of Continuous-fiber nonwoven fabric and Composite Material

A thermoplastic phenoxy resin (a condensation reaction product of 2,2-bis(4-hydroxyphenyl)propane and epichlorohydrin) having a weight-average molecular weight of 90,000 and a glass transition temperature of 90°C was prepared and was blown at a rate of 22 Nm$^3$ per meter of a nozzle width at a spinning temperature of 360°C and a hot air temperature of 360°C to obtain a melt-blown nonwoven fabric as a continuous-fiber nonwoven fabric having a basis weight (A) of 12.2 g/m$^2$, a permeability (B) of 912 cm$^3$/cm$^2$·s, an average fiber diameter of 13.3 $\mu$m, and a thickness of 0.44 mm/sheet. The obtained nonwoven fabric had a ratio [the permeability (B) / the basis weight (A)] of 100 or lower and was excellent in denseness. Except for using the nonwoven fabric obtained by this procedure, a composite material was prepared in a same manner as that of Example 1. The obtained composite material had small cloudiness and air entrainment but was still applicable for practical use.

Example 7

Preparation of Continuous-fiber nonwoven fabric and Composite Material

A same thermoplastic phenoxy resin as the resin used in Example 1 was prepared and was blown at a rate of 18 Nm$^3$ per meter of a nozzle width at a spinning temperature of 300°C and a hot air temperature of 300°C to obtain a melt-blown nonwoven fabric as a continuous-fiber nonwoven fabric having a basis weight (A) of 12.0 g/m$^2$, a permeability (B) of 1318 cm$^3$/cm$^2$·s, an average fiber diameter of 11.2 $\mu$m, and a thickness of 0.35 mm/sheet. The obtained nonwoven fabric had a ratio [the permeability (B) / the basis weight (A)] exceeding 100. Except for using the nonwoven fabric obtained by this procedure, a composite material was prepared in a same manner as that of Example 1. The obtained composite material had small cloudiness and air entrainment but was still applicable for practical use.

Comparative Example 1

Preparation of Continuous-fiber nonwoven fabric

A thermoplastic phenoxy resin (a condensation reaction product of 2,2-bis(4-hydroxyphenyl)propane and epichlorohydrin) having a weight-average molecular weight of 8,000 and a glass transition temperature of 90°C was prepared and was blown at a rate of 18 Nm$^3$ per meter of a nozzle width at a spinning temperature of 300°C and a hot air temperature of 300°C. Due to frequent fiber breakage immediately below the nozzle and a large amount of fly waste scattering, an intended continuous-fiber nonwoven fabric was not obtained.

Comparative Example 2

Preparation of Continuous-fiber nonwoven fabric and Composite Material

A thermoplastic phenoxy resin (a condensation reaction product of 2,2-bis(4-hydroxyphenyl)propane and epichlorohydrin) having a weight-average molecular weight of 200,000 and a glass transition temperature of 90°C was prepared and was blown at a rate of 18 Nm$^3$ per meter of a nozzle width at a spinning temperature of 340°C and a hot air temperature of 340°C to obtain a melt-blown nonwoven fabric as a continuous-fiber nonwoven fabric having a basis weight (A) of 12.9 g/m$^2$, a permeability (B) of 2187 cm$^3$/cm$^2$·s, an average fiber diameter of 21.3 $\mu$m, and a thickness of 0.59 mm/sheet. The obtained nonwoven fabric had a ratio [the permeability (B) / the basis weight (A)] exceeding 100 and had insufficient denseness. Except for using the nonwoven fabric obtained by this procedure, a composite material was prepared in a same manner as that of Example 1. The obtained composite material had poor appearance.

Comparative Example 3

Preparation of Continuous-fiber nonwoven fabric and Composite Material

A thermoplastic phenoxy resin (a condensation reaction product of 2,2-bis(4-hydroxyphenyl)propane and epichlorohydrin) having a weight-average molecular weight of 30,000 and a glass transition temperature of 140°C was prepared and was blown at a rate of 18 Nm$^3$ per meter of a nozzle width at a spinning temperature of 340°C and a hot air temperature of 340°C to obtain a melt-blown nonwoven fabric having a basis weight (A) of 12.5 g/m$^2$, a permeability (B) of 712 cm$^3$/cm$^2$·s, an average fiber diameter of 9.7 $\mu$m, and a thickness of 0.37 mm/sheet. Except for using the nonwoven fabric obtained by this procedure, a composite material was prepared in a same manner as that of Example 1. The obtained composite material had poor appearance because of cloudiness caused by unmelted residues.

Comparative Example 4

Preparation of Continuous-fiber nonwoven fabric and Composite Material

A thermoplastic phenoxy resin (a condensation reaction product of 2,2-bis(4-hydroxyphenyl)propane and epichlorohydrin) having a weight-average molecular weight of 120,000 and a glass transition temperature of 90°C was prepared and was blown at a rate of 22 Nm$^3$ per meter of a nozzle width at a spinning temperature of 360°C and a hot air temperature of 360°C to obtain a melt-blown nonwoven fabric as a continuous-fiber nonwoven fabric having a basis weight (A) of 11.9 g/m$^2$, a permeability (B) of 1512 cm$^3$/cm$^2$·s, an average fiber diameter of 17.1 $\mu$m, and a thickness of 0.49 mm/sheet. Except for using the nonwoven fabric obtained by this procedure, a composite material was prepared in a same manner as that of Example 1. The obtained composite material had poor appearance.

[Table 1]

| | | Ex. 1 | Ex. 2 | Ex. 3 | Ex. 4 | Ex. 5 | Ex. 6 | Ex. 7 | Com. Ex. 1 | Com. Ex. 2 | Com. Ex. 3 | Com. Ex. 4 |
|---|---|---|---|---|---|---|---|---|---|---|---|---|
| Thermoplastic phenoxy resin | Weight-average molecular weight (Mw) | 30,000 | 30,000 | 50,000 | 20,000 | 30,000 | 90,000 | 30,000 | 8,000 | 200,000 | 30,000 | 120,000 |
| | Glass transition temperature (°C) | 90 | 90 | 95 | 70 | 90 | 90 | 90 | 90 | 90 | 140 | 90 |
| Continuous-fiber nonwoven fabric | Basis weight (A) (g/m$^2$) | 7.6 | 12.2 | 12.3 | 12.3 | 20.4 | 12.2 | 12.0 | Nonspinnable | 12.9 | 12.5 | 11.9 |
| | Permeability (B) (cm$^3$/cm$^2$·s) | 637 | 243 | 496 | 87 | 745 | 912 | 1318 | | 2187 | 712 | 1512 |
| | (B)/(A) | 83.8 | 19.9 | 40.3 | 7.1 | 36.5 | 74.8 | 109.8 | | 169.5 | 57.0 | 127.1 |
| | Average fiber diameter ($\mu$m) | 8.6 | 7.9 | 8.8 | 7.2 | 12.7 | 13.3 | 11.2 | | 21.3 | 9.7 | 17.1 |
| | Thickness (mm/ sheet) | 0.18 | 0.26 | 0.31 | 0.13 | 0.47 | 0.44 | 0.35 | | 0.59 | 0.37 | 0.49 |
| Evaluation | Appearance of composite material | Good | Good | Good | Good | Good | Moderate | Moderate | | Poor | Poor | Poor |

EP 3 936 650 B1

INDUSTRIAL APPLICABILITY

Since the continuous-fiber nonwoven fabric according to the present invention has excellent denseness, the continuous-fiber nonwoven fabric may be used in combination with reinforcing fibers and a matrix resin to form a composite material, so that the resultant composite material has good appearance. Such a composite material may be shaped into a form such as a board form and be suitably used as a heat insulating material, a protective material, an insulating material, or the like.

Although the present invention has been described in terms of the preferred Examples thereof, those skilled in the art would readily arrive at various changes and modifications in view of the present specification without departing from the scope of the invention.

Accordingly, such changes and modifications are included within the scope of the present invention defined by the appended claims.

**Claims**

1. A continuous-fiber nonwoven fabric comprising fibers containing an amorphous thermoplastic phenoxy resin as a main component, wherein the thermoplastic phenoxy resin has a weight-average molecular weight in a range of from 10,000 to 100,000 and a glass transition temperature equal to or lower than 100°C, wherein the weight-average molecular weight and the glass transition temperature of the thermoplastic phenoxy resin are determined by the measurement methods described in the description.

2. The continuous-fiber nonwoven fabric according to claim 1, wherein the continuous-fiber nonwoven fabric is a melt-blown nonwoven fabric or a spunbonded nonwoven fabric.

3. The continuous-fiber nonwoven fabric according to claim 1 or 2, wherein the fibers have an average fiber diameter equal to or smaller than 20 $\mu$m.

4. The continuous-fiber nonwoven fabric according to any of claims 1 to 3, wherein the continuous-fiber nonwoven fabric has a basis weight (A) equal to or lower than 100 g/m$^2$.

5. The continuous-fiber nonwoven fabric according to any of claims 1 to 4, wherein the continuous-fiber nonwoven fabric has a ratio of a permeability (B) to a basis weight (A) [permeability (B) / basis weight (A)] equal to or lower than 100, wherein the permeability is determined by the measurement method described in the description.

6. A layered body comprising: the continuous-fiber nonwoven fabric as recited in any of claims 1 to 5; and a preform containing reinforcing fibers and a matrix resin, the preform being overlaid on the continuous-fiber nonwoven fabric.

7. The layered body according to claim 6, wherein the reinforcing fibers are at least one selected from a group consisting of glass fibers, carbon fibers, liquid crystal polyester fibers, high-strength polyethylene fibers, aramid fibers, polyparaphenylene benzobisoxazole fibers, polyparaphenylene benzobisimidazole fibers, polyparaphenylene benzobisthiazole fibers, ceramic fibers, and metal fibers.

8. The layered body according to claim 6 or 7, wherein the matrix resin is at least one selected from a group consisting of an epoxy resin, a phenol resin, an unsaturated polyester resin, a cyanate ester resins, a phenol-formaldehyde resin, and a melamine resin.

9. The layered body according to any of claims 6 to 8, wherein the layered body comprises the continuous-fiber nonwoven fabric as an outermost layer on either side of the layered body.

10. A composite material comprising: a melt of the continuous-fiber nonwoven fabric as recited in any of claims 1 to 5; reinforcing fibers; and a matrix resin, wherein an outermost layer on either side of the composite material comprises the melt of the continuous-fiber nonwoven fabric.

11. The composite material according to claim 10, wherein the reinforcing fibers are fixed by the melt of the continuous-fiber nonwoven fabric.

12. A method for producing the composite material as recited in claim 10 or 11, the method comprising subjecting the layered body as recited in any of claims 6 to 9 to curing treatment.

**Patentansprüche**

1. Endlosfaservliesstoff, umfassend Fasern, enthaltend ein amorphes thermoplastisches Phenoxyharz als Hauptkomponente, wobei das thermoplastische Phenoxyharz ein gewichtsmittleres Molekulargewicht in einem Bereich von 10.000 bis 100.000 und eine Glasübergangstemperatur gleich wie oder niedriger als 100°C aufweist, wobei das gewichtsmittlere Molekulargewicht und die Glasübergangstemperatur des thermoplastischen Phenoxyharzes durch die in der Beschreibung beschriebenen Messverfahren bestimmt werden.

2. Endlosfaservliesstoff nach Anspruch 1, wobei der Endlosfaservliesstoff ein schmelzgeblasener Vliesstoff oder ein spinngebundener Vliesstoff ist.

3. Endlosfaservliesstoff nach Anspruch 1 oder 2, wobei die Fasern einen durchschnittlichen Faserdurchmesser von 20 $\mu$m oder weniger aufweisen.

4. Endlosfaservliesstoff nach einem der Ansprüche 1 bis 3, wobei der Endlosfaservliesstoff ein Flächengewicht (A) von gleich wie oder weniger als 100 g/m$^2$ aufweist.

5. Endlosfaservliesstoff nach einem der Ansprüche 1 bis 4, wobei der Endlosfaservliesstoff ein Verhältnis von Permeabilität (B) zu Flächengewicht (A) [Permeabilität (B) / Flächengewicht (A)] gleich wie oder kleiner als 100 aufweist, wobei die Permeabilität durch das in der Beschreibung beschriebene Messverfahren bestimmt wird.

6. Schichtkörper, umfassend: den Endlosfaservliesstoff nach einem der Ansprüche 1 bis 5; und eine Vorform, enthaltend Verstärkungsfasern und ein Matrixharz, wobei die Vorform auf den Endlosfaservliesstoff aufgelegt ist.

7. Schichtkörper nach Anspruch 6, wobei die Verstärkungsfasern mindestens eine Faser sind, ausgewählt aus einer Gruppe, bestehend aus Glasfasern, Kohlenstofffasern, Flüssigkristallpolyesterfasern, hochfesten Polyethylenfasern, Aramidfasern, Polyparaphenylenbenzobisoxazolfasern, Polyparaphenylenbenzobisimidazolfasern, Polyparaphenylenbenzobisthiazolfasern, Keramikfasern und Metallfasern.

8. Schichtkörper nach Anspruch 6 oder 7, wobei das Matrixharz mindestens eines ist, ausgewählt aus einer Gruppe, bestehend aus einem Epoxidharz, einem Phenolharz, einem ungesättigten Polyesterharz, einem Cyanatesterharz, einem Phenol-Formaldehyd-Harz und einem Melaminharz.

9. Schichtkörper nach einem der Ansprüche 6 bis 8, wobei der Schichtkörper den Endlosfaservliesstoff als äußerste Schicht auf beiden Seiten des Schichtkörpers umfasst.

10. Verbundmaterial, umfassend: eine Schmelze des Endlosfaservlieses nach einem der Ansprüche 1 bis 5; Verstärkungsfasern; und ein Matrixharz, wobei eine äußerste Schicht auf jeder Seite des Verbundmaterials die Schmelze des Endlosfaservlieses umfasst.

11. Verbundmaterial nach Anspruch 10, wobei die Verstärkungsfasern durch die Schmelze des Endlosfaservlieses fixiert sind.

12. Verfahren zur Herstellung des Verbundmaterials nach Anspruch 10 oder 11, wobei das Verfahren das Unterziehen des Schichtkörpers nach einem der Ansprüche 6 bis 9 einer Härtungsbehandlung umfasst.

**Revendications**

1. Tissu non tissé à fibres continues comprenant des fibres contenant une résine phénoxy thermoplastique amorphe en tant que composant principal, dans lequel la résine phénoxy thermoplastique a un poids moléculaire moyen en poids dans une plage allant de 10 000 à 100 000 et une température de transition vitreuse inférieure ou égale à 100 °C, dans lequel le poids moléculaire moyen en poids et la température de transition vitreuse de la résine phénoxy thermoplastique sont déterminés par les procédés de mesure décrits dans la description.

**2.** Tissu non tissé à fibres continues selon la revendication 1, dans lequel le tissu non tissé à fibres continues est un tissu non tissé ayant subi une fusion-soufflage ou un tissu non tissé filé-lié.

**3.** Tissu non tissé à fibres continues selon la revendication 1 ou 2, dans lequel les fibres ont un diamètre de fibre moyen inférieur ou égal à 20 $\mu$m.

**4.** Tissu non tissé à fibres continues selon l'une quelconque des revendications 1 à 3, dans lequel le tissu non tissé à fibres continues a un poids de base (A) inférieur ou égal à 100 g/m$^2$

**5.** Tissu non tissé à fibres continues selon l'une quelconque des revendications 1 à 4, dans lequel le tissu non tissé à fibres continues a un rapport d'une perméabilité (B) sur un poids de base (A) [perméabilité (B) / poids de base (A)] inférieur ou égal à 100, dans lequel la perméabilité est déterminée par le procédé de mesure décrit dans la description.

**6.** Corps stratifié comprenant : le tissu non tissé à fibres continues selon l'une quelconque des revendications 1 à 5 ; et une préforme contenant des fibres de renforcement et une résine de matrice, la préforme étant recouverte sur le tissu non tissé à fibres continues.

**7.** Corps stratifié selon la revendication 6, dans lequel les fibres de renforcement sont au moins une sélectionnée parmi un groupe constitué de fibres de verre, fibres de carbone, fibres de polyester à cristaux liquides, fibres de polyéthylène haute résistance, fibres d'aramide, fibres de polyparaphénylène benzobisoxazole, fibres de polyparaphénylène benzobisimidazole, fibres de polyparaphénylène benzobisthiazole, fibres de céramique et fibres métalliques.

**8.** Corps stratifié selon la revendication 6 ou 7, dans lequel la résine de matrice est au moins une sélectionnée parmi un groupe constitué d'une résine époxy, d'une résine de phénol, d'une résine de polyester insaturé, d'une résine d'ester de cyanate, d'une résine de phénol-formaldéhyde et d'une résine de mélamine.

**9.** Corps stratifié selon l'une quelconque des revendications 6 à 8, dans lequel le corps stratifié comprend le tissu non tissé à fibres continues en tant que couche la plus externe sur l'un ou l'autre côté du corps stratifié.

**10.** Matériau composite comprenant : une fonte du tissu non tissé à fibres continues selon l'une quelconque des revendications 1 à 5 ; des fibres de renforcement ; et une résine de matrice, dans lequel une couche la plus externe sur l'un ou l'autre côté du matériau composite comprend la fonte du tissu non tissé à fibres continues.

**11.** Matériau composite selon la revendication 10, dans lequel les fibres de renforcement sont fixées par la fonte du tissu non tissé à fibres continues.

**12.** Procédé de production du matériau composite selon la revendication 10 ou 11, le procédé comprenant soumettre le corps stratifié selon l'une quelconque des revendications 6 à 9 à un traitement durcissant.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8409486 B